# EUROPEAN PATENT APPLICATION

(11) **EP 1 178 447 A1**
(43) Date of publication of application: **06.02.2002**
(21) Application number: 00830549.2
(22) Date of filing: 31.07.2000
(51) Int. Cl.: G07F 7/10, H04L 29/06

(54) **Communication system for accessing service provision centres by using memory cards**

(71) Applicant: Flamini, Marco, 00040 Castelluccia Marino (RM) (IT)
(72) Inventor: Flamini, Marco, 00040 Castelluccia Marino (RM) (IT)
(74) Representative: Robba, Pierpaolo

(57) **Abstract**

A communication system for the access to service provision centres (10A, 10B, 10C) by peripheral terminals (4a, 4b...4n) uses memory cards (6) to enable access to a centre. The cards (6) are arranged to store, besides identification and authentication data, a copy of data sets which are stored in data bases (3A, 3B, 3C) of said centres and which the owner of the card (6) is authorised to access, and, in case the connection with a desired centre (10A, 10B, 10C) is impossible, the service is locally managed, by using the data stored in the card (6).

## Description

The present invention relates to communication systems, and more particularly it concerns a communication system allowing remote terminals to access service provision centres by using memory cards, in particular smart cards.

Memory cards are being used since a long time for a wide number of aims: telephone card, credit card or bank card in general, cards for signalling the presence at the workplace, and so on. In case of smart cards, new applications are being proposed which allow the cards to play a more active role, in order to fully exploit the capabilities of their processing units. These new applications include control of the access to a communication network. The card stores the information concerning authorisations given to the owner, who will or will not obtain a service available through the network at the end of a verification process of said authorisations, managed by service management units (servers). Such a use is becoming widespread also for services related with everyday life, for instance the services of the public administration, and in a near future using a card and a communication network will be indispensable to obtain most such services.

Now, anyone using computerised services knows that frequently connection with a server cannot be set up for more or less long periods. This may be due to network problems, to server problems, to local terminal problems and so on. On the other hand, it is also known that for cost reasons it is impossible to solve this problem by means of a redundancy of all units necessary for service provision, from the data bases to the communication lines and so on. In a scenario like that considered above, where access to a remote server through a network will be the only way to obtain a service, the problem of providing the service to the users also in case the server cannot be accessed must be tackled.

The object of the invention is just to provide a solution to the above problem.

According to a first aspect of the invention, there is provided a communication system comprising a communication network to which there are connected service provision centres each comprising a server and a data base, and a plurality of peripheral terminals that are associated with respective memory card readers, form the service access points and are arranged to set up a connection with a requested centre upon insertion of a card into the respective reader. The system is characterised in that: said memory cards include, besides a first memory area intended to store information required to set up the connection with said centres, a second memory area intended to store a copy of data sets, which are contained in said data bases and which the card owner is authorised to access; said servers comprise means for carrying out, in case of connection between a terminal and a service provision centre, an initial loading of said data sets into said second memory area of a card or possible subsequent updating of said data sets; and said terminals comprise local service management means, which are operative at least in case connection to a desired service provision centre is impossible and are arranged to read data of interest for the service request from said second memory area in the card and to deal with the request by utilising the data read.

According to another aspect of the invention, there is provided a communication method in a system of the above kind, comprising the steps of: dividing the memory of said cards into a first memory area intended to store information required to set up the connection with the service provision centres, and a second memory area intended to store a copy of data sets, which are stored in said data bases and which the card owner is authorised to access; carrying out, in case of connection between a terminal and a service provision centre and upon command of servers, an initial loading of said data sets into said second memory area of a card and possible subsequent updating thereof; and, at least in case the connection between a peripheral terminal and a desired service provision centre cannot be set up, performing a local service management, by reading data of interest for that request from said second memory area in the card and utilising the data in local service management means in the peripheral terminal.

According to yet another aspect of the invention, there is provided a memory card for use in the system and the method of the invention, wherein the card memory comprises a first memory area storing data required to allow the connection with service provision centres, and a second memory area that: is intended to store a copy of data sets, which are stored in data bases of the service provision centres and which the card owner is authorised to access; is initially written and subsequently updated, if necessary, by the service provision centres during connections with said centres; and is read by local service management means at least in case the connection with a desired centre is impossible.

For a better understanding reference is made to the accompanying drawings, which show a preferred embodiment of the invention and in which:
- Fig. 1 is a block diagram of a communication system in accordance with the invention;
- Fig. 2 is a diagram of the memory organisation in a memory card utilisable in the system in accordance with the invention;
- Fig. 3 is a basic block diagram of the units managing data backup and restore; and
- Fig. 4 is a flow chart of the method of the invention.

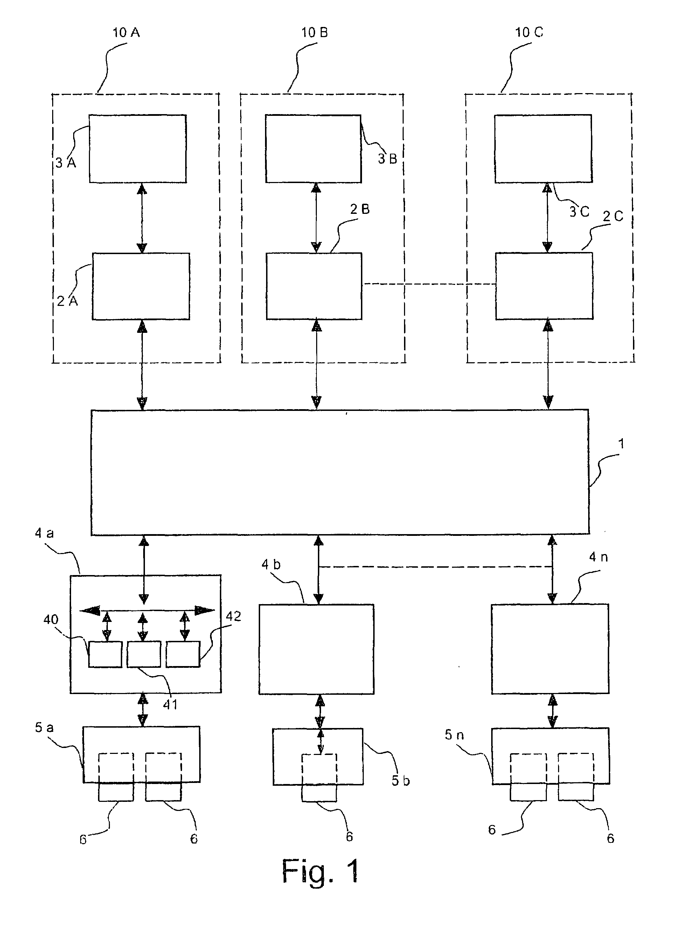

Referring to Fig. 1, the system according to the invention essentially comprises a communication network 1 to which there are connected on the one side a plurality of service provision centres 10A, 10B, 10C..., each comprising a centralised server 2A, 2B, 2C... and a centralised record or data base 3A, 3B, 3C..., and on the other side a plurality of peripheral terminals 4a, 4b...4n forming the point of access to the services.

The nature of the services provided by centres 10 and hence of the information stored in data bases 3 has no interest for the invention. By way of example, when necessary for a better clarity of the invention, reference will be made to services of the public administration: one of data bases 3 will then store personal information, another one tax information, yet another one health information, and so on. Terminals 4 can be directly connected to network 1, or they can be connected to local area networks in turn connected to main network 1.

Terminals 4a...4n are associated with respective readers 5a...5n of memory cards 6, and they allow the card owner to request a service when the card is inserted into the respective reader. Under regular operation conditions of the network, service provision is managed by servers 2, in conventional manner.

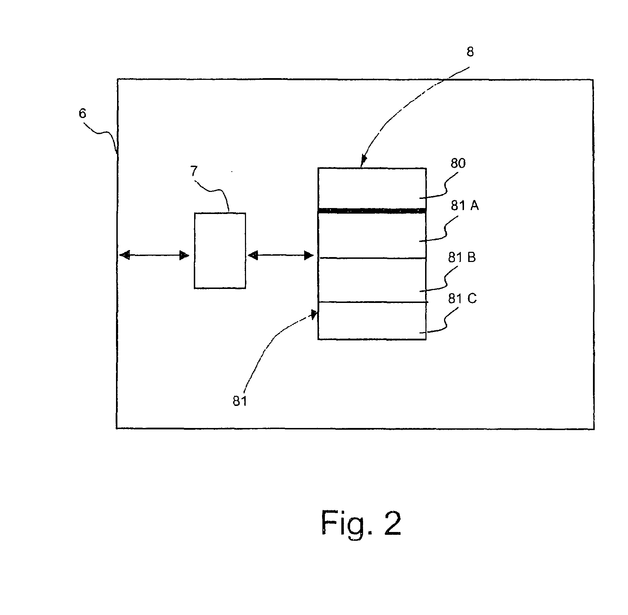

Preferably card 6 are smart cards, i.e. cards equipped with an integrated data processing circuit. For the sake of clarity of the following description, it has been deemed useful to show one such card in Fig. 2, by putting integrated data processing circuit 7 and memory 8 of a card 6 into evidence.

In a system according to the invention, cards 6 have a twofold task. The first task is the conventional one of means for enabling access to the service. In many applications, the information stored in data bases 3 may be confidential information, and therefore service provision may require identification not only of the card, but also of the card owner and possibly of the terminal, as well as an acknowledgement to the card owner that actually he/she is connected to the requested server 2. Memory 8 will then include a first area 80 containing all information needed for the card identification and, if necessary, for the mutual authentication of the user, the terminal and/or the server. The second task, which is peculiar to the present invention, is that of backup memory for the data (or for part of the data) stored in one or more data bases 3 and accessible to the card owner. A second area 81 of memory 8 is devoted to said task and advantageously it can be divided into subareas 81A, 81B, 81C..., each associated with a service and hence univocally associated with a centre 10.

The essential aim of such a backup area is to allow a local service management through terminals 4 when the desired centre 10 cannot be reached, for instance because the network is down. The local management modalities will be described below.

The division of memory 8 into two areas 80 and 81 and the possible division of area 81 into subareas 81A, 81B, 81C... are managed by the operating system of integrated circuit 7, in particular by the part known as "file system", in a manner well known to the skilled in the art. If desired, each subarea may be associated with a write password and a read password, possibly different from each other. Card 6 may be predisposed to perform that task during manufacture or later, when the need arises.

Under normal operating conditions of the system, backup area 81 will be updated, when necessary, under the control of server 2 of the centre to which the card owner has become connected. The processing units of servers 2 will then store all information necessary in order a server can access the associated subarea, including the information necessary for password management. The fact that the invention requires writing into the card memory does not entail modifications to the reader structure: indeed, already when the card is conventionally used as means for controlling the access to communication systems, the authentication procedures require writing into area 80.

As to the use of the card as backup memory, the skilled in the art knows that smart cards can be equipped with memories of different sizes depending on the intend card use and that identification and authentication information occupy only a limited portion of the memory capacity available in the present cards. Thus, it is only necessary to choose a card with a memory capacity suitable for the amount of data to be stored.

The local management of a service in case connection with a server 2 is impossible may take place in different manner depending on the terminal characteristics.

More particularly, two kinds of terminals can be envisaged. A first kind is enabled to read the data stored in card memory area 81 but it is not enabled to locally modify them. Such terminals can of course perform the processing required to provide a service requiring only reading the data stored in the card. The service locally provided to the user will reflect the situation of the user's data at the moment of the last card updating. With reference to the application to services of the public administration, an example of terminals of this kind can be an automatic desk for the request of certificates.

The second kind of terminals on the contrary includes terminals, hereinafter referred to as "qualified terminals", which are also enabled to act on the data stored in backup area 81, by locally updating or supplementing them. Such terminals must be equipped with a complete local copy of the card management programs stored in the servers, so that the terminals can access memory area 81 also for writing.

In order to take into account that the data in area 81 might have been updated during a local service management, whatever the kind of terminal being used, when a connection with a server 2 is set up, the server must compare the date of the last data updating in memory area 81 of card 6 and in data base 3 before providing the service. If the data in the data base are more recent than those in the card, server 2 will update the card; otherwise, it will copy the data stored in card 6 into the data base 3, thereby restoring the latter. This entails that both in memory area 81 and in data bases 3 the data are associated with time information, e.g. date and time, about the last updating carried out. This is common practice in data processing.

Moreover, to ensure a greater safety in the data exchange between card 6 and server 2, processing unit 7 in card 6 may include means for encrypting any data to be transferred to the server.

In the drawing, qualified terminals has been shown as being equipped with a card reader 5 arranged to read two cards 6 (see terminals 4a and 4n): one of the cards will be the user's card, the other will be a card committed to the person authorised to modify the data (government official, doctor etc.). Any local data modification can be carried out only if both cards and both owners have been properly identified. Non-qualified terminals (e. g. terminal 4b) are on the contrary shown as being equipped with readers for single cards. Processing unit 40 with data and program memories 41, 42 has been schematically shown for one of the terminals: the whole of said devices forms the means for local service management.

In case of qualified terminals, a copy of the data stored in backup area 81 of the memory of cards 6 to be used with a given terminal may be stored also in data memory 41 of the terminal (or, if such a memory is not sufficient, in an external memory possibly shared among several terminals): a data updating in backup area 81 by a qualified terminal or a server 2 will entail simultaneous data updating in memory 41. By such an arrangement, the servers might automatically poll the terminals and restore if necessary their data bases, e. g. when network operation restarts after a stop.

Moreover, for some applications, some updating might be first carried out locally and subsequently transferred to the server, upon request thereof or with predetermined periodicity. In such case, it will be convenient if the terminal informs the server of which data have been concerned by the updating.

Of course, data backup on card 6 or restore of data base 3 will still take place whenever a connection to a centre through the card takes place.

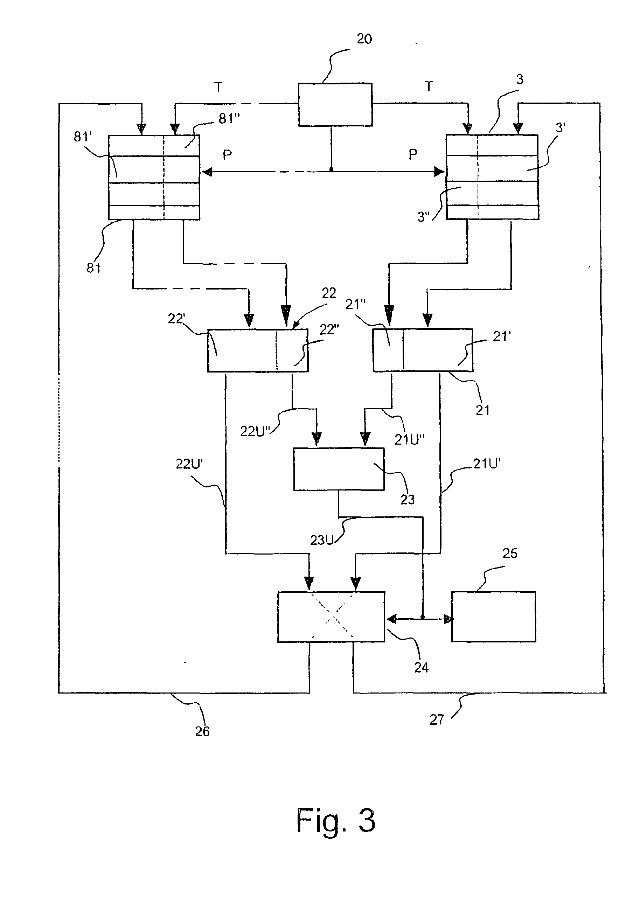

Fig. 3 shows a basic diagram of the means managing data updating in backup area 81 of card memory 8 and in data base 3. Said means are part of the processing units of server 2 and could be implemented even through suitable programs. Data base 3 and area 81 have been divided into two parts 3', 3" and 81', 81" allotted to the actual data and to the time information concerning the updating, respectively.

A logic network 20 controlling reading from and writing into the memory will address, upon receipt of a service request, homologous data in memories 3, 81 by generating the suitable pointer P. Memories 3, 81 are connected to respective buffer memories 21, 22 also divided into two parts allotted to the data (areas 21', 22') and the time information (areas 21", 22") read from memories 3, 81. Outputs 21U', 22U' of areas 21', 22' of buffer memories 21, 22 are connected to the inputs of a switch 24, and outputs 21U", 22U" of areas 21", 22" are connected to the inputs of a comparator 23. Comparator output 23U is fed to control input of switch 24 and to an alarm unit 25. Depending on the pattern present at its control input, switch 24 connects either input 21U' with a line 26 conveying the data read from data base 3 to network 1 and hence to memory 81, or input 22U' with a line 27 conveying the data read from memory 81 to data base 3. Connection between input 21U' and output 26 of switch 24 is also the connection corresponding to normal operation conditions, when the network is operating and the service is managed by server 2 by using the data of data base 3.

Comparator 23 can output for instance 2 bits, of which the different combinations correspond for instance to the following situations:
00 equal updating dates
01 card updating more recent than data base updating
10 data base updating more recent than card updating
11 wrong date.

The actions to be taken can be as follows:
00 no updating is necessary (switch 24 connects input 21U' with output 26, as during normal operation)
01 connection between input 22U' and output 27 of switch 24
10 connection between input 21U' and output 26 of switch 24
11 operation of alarm 25.

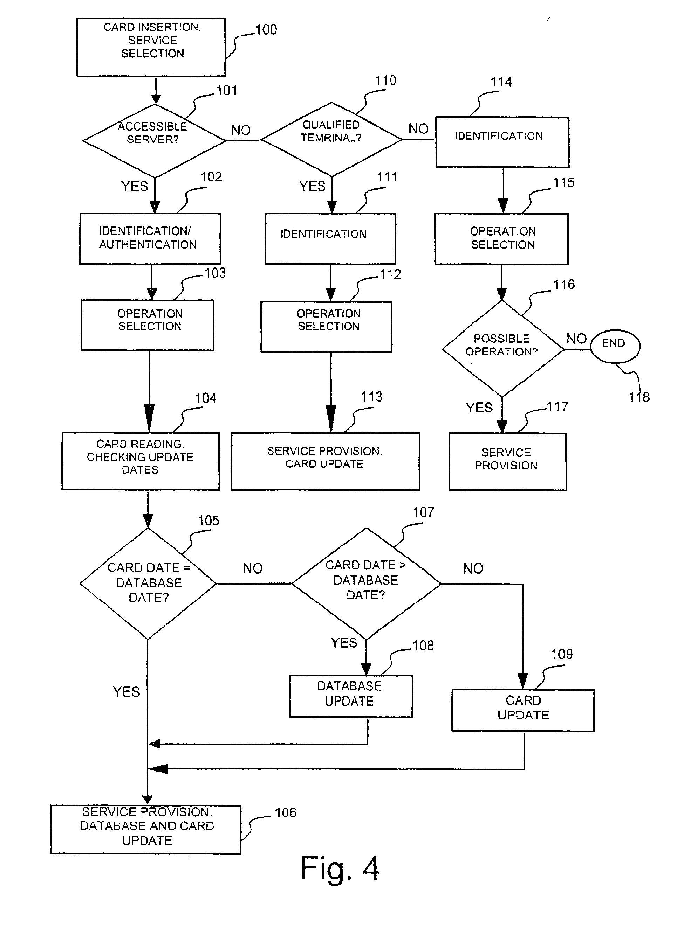

Fig. 4 shows as a flow chart the communication method according to the invention. A steady state condition is considered, in which the card being used already contains data in its memory 81.

The first step 100 is the insertion of card 6 into reader 5 and the service selection. By way of example, the case is considered in which the card owner undergoes a medical examination the results of which (including possible prescriptions) will be recorded into the data base of the National Health Service. If the requested server can be reached (successful check at step 101), after a mutual identification and authentication of the card, the owner and the server (step 102), the specific operation is selected and server 2 consequently selects the necessary data, in the example considered, the patient's case history or a part thereof (step 103). At step 104, the content of backup area 81 is read and the dates of the last updating in said area and in data base 3 are compared. If the dates are the same (step 105), no updating is to be made and the server provides the requested service (step 106). In the present instance, the server will make the patient's case history available on doctor's terminal 4 and the updating made by the doctor will be simultaneously recorded into data base 3 and card 6. If the updating date of card 6 is later than that of the data base (step 107), server 2 will command data reading from card 6 and writing thereof into data base 3 (step 108). If on the contrary the updating date of card 6 is earlier than that of the data base, server 2 will command writing of the data in data base 3 into card 6 (step 109). After steps 108, 109, the service is provided as in the preceding case.

As said, any data exchange between the server and the card can take place in encrypted manner: therefore, a check about the need of starting the encryption process and the possible encryption could be carried out before steps 108, 109.

If the server is not accessible (negative result of the check at step 101), there is the need to distinguish whether the access request is originated by a qualified or a non-qualified terminal (step 110). In the first case, after a procedure of mutual identification of the card and the terminal (step 111), the operation is selected and the service is provided, resulting in a card updating (steps 112, 113). In the considered example, the doctor can store the examination result on card 6 and the patient can obtain the prescribed medicines, if any, when going to a chemist's shop connected to the system.

In case of a non-qualified terminal, after the usual card identification (step 114) and the operation selection (step 115), a check is made on whether the requested operation is possible, i. e. it requires only a data reading from card 6 (step 116). In the affirmative, the terminal provides the requested service (step 116), otherwise the operations are stopped.

It is to be appreciated that what has been said about the card holds also to memory 41 of the local service management means.

The flow chart does not show the case of automatic periodic updating: this will be started by the expiry of a pre-set time and not by a service request by the card owner, and will be managed by the server through a polling of all terminals. Taking into account the conditions in which the automatic updating is assumed to take place, the situation corresponds to that of successful check at step 107.

It is to be appreciated that, even if the above description refers to a mutual authentication of the server, the card and the card owner, or to a mutual identification of the terminal and the card, the invention applies also to systems where a mere recognition of the card by the server takes place. On the other hand, the invention does not concern the procedures for accessing the server.

It is evident that the above description is given by way of non limiting example, and that variants and modifications are possible without departing from the scope of the invention.

## Claims

1. A communication system for the access to service provision centres (10A, 10B, 10C) by using memory cards, said system comprising a communication network (1) to which there are connected said centres (10A, 10B, 10C), each comprising a server (2A, 2B, 2C) and a data base (3A, 3B, 3C), and a plurality of peripheral terminals (4a, 4b...4n) that are associated with respective memory card readers (5a, 5b...5n), form the service access points and are arranged to set up a connection with a selected centre (10A, 10B, 10C) upon insertion of a card (6) into the respective reader (5a, 5b...5n),
**characterised in that**:
- said memory cards (6) include, besides a first memory area (80) intended to store information required to set up the connection with said centres (10A, 10B, 10C), a second memory area (81) intended to store a copy of data sets, which are contained in said data bases (3A, 3B, 3C) and which the owner of the card (6) is authorised to access;
- said servers (2A, 2B, 2C) comprise means (20, 21, 24) for carrying out, in case of connection between a terminal (4a...4n) and a service provision centre (10A, 10B, 10C), an initial loading of data of said sets into said second memory area (81) of a card (6) or possible subsequent updating of said data, while associating therewith time information concerning the loading or the updating that have been carried out; and
- said terminals (4a...4n) comprise local service management means (40, 41, 42), which are operative at least in case the connection to the desired service provision centre is impossible and are arranged to read data of interest for the service request from said second memory area (81) in the card (6) and to deal with the service request by utilising the data read.

2. A system as claimed in claim 1, **characterised in that** the local service management means (40, 41, 42) of at least some of said peripheral terminals (4b) are only enabled to deal with service requests which do not require data updating.

3. A system as claimed in claim 1 or 2, **characterised in that** the local service management means (40, 41, 42) of at least some of said peripheral terminals (4a, 4n) are also enabled to update the data directly in said second memory area (81), while associating the data with time information concerning each updating carried out.

4. A system as claimed in any of claims 1 to 3, **characterised in that** said servers (2A, 2B, 2C) comprise means (20, 21, 22, 23, 24) for reading the contents of said second memory area (81), comparing the time information concerning the last updating with time information concerning the last updating of the same data in the data base (3A, 3B, 3C), and causing copying into said second memory area (81) of the card (6) the corresponding data stored in the data base (3A, 3B, 3C) whenever the latter are more recent than the data in the card (6), and copying into the data base (3A, 3B, 3C) the data stored in said second memory area (81) whenever the latter are more recent than the data in the data base (3A, 3B, 3C).

5. A system as claimed in claim 3 or 4, **characterised in that** said local service management means (40, 41, 42) comprise memory means (41) arranged to store the data sets stored in the second memory areas (81) of cards (6) that can be utilised jointly with the terminal (4a, 4n) the management means belong to, and said servers (2A, 2B, 2C) and said local service management means (40, 41, 42) are arranged to cause updating of said memory means (41) whenever they update the second memory area (81) of a card (6).

6. A system as claimed in claim 5, **characterised in that** said local service management means (40, 41, 42) are arranged to perform a local updating of the data in said second memory area (81) and in said memory means (41), and to supply said servers (2A, 2B, 2C) with information concerning the updating carried out.

7. A system as claimed in claim 6, **characterised in that** said servers (2A, 2B, 2C) comprise means for causing transfer of the locally updated data to the respective centralised data base (3), periodically or at instants set by said servers (2A, 2B, 2C).

8. A system as claimed in any preceding claim, **characterised in that** said memory cards (6) are smart cards comprising an operating system arranged to create, in said second memory area (81), a plurality of subareas (81A, 81B, 81C) each univocally associated with one of the services, and said servers (2A, 2B, 2C) and said local service management means (40, 41, 42) comprise means for addressing, upon a service request, the corresponding subarea (81A, 81B, 81C) of said second memory area.

9. A system as claimed in claim 8, **characterised in that** said cards (7) comprise means for encrypting the data to be sent to said servers (2A, 2B, 2C).

10. A method of accessing service provision centres (10A, 10B, 10C) by using memory cards (6), wherein each said centre (10A, 10B, 10C) comprises a server (2A, 2B, 2C) and a data base (3A, 3B, 3C) and wherein access to said centres (10A, 10B, 10C) takes place from peripheral terminals (4a, 4b...4n) that are associated with respective readers (5a, 5b...5n) of the memory cards (6) and are arranged to set up a connection to said centres through a communication network (1) upon insertion of a card (6) into the respective reader (5a, 5b...5n), **characterised in that** it comprises the steps of:
- dividing the memory (8) of said cards (6) into a first memory area (80) intended to store information required to set up the connection with said centres (10A, 10B, 10C), and a second memory area (81) intended to store a copy of data sets, which are stored in said data bases (3A, 3B, 3C) and which the owner of the card (6) is authorised to access;
- carrying out, when a connection between a terminal (4a...4n) and a service provision centre (10A, 10B, 10C) is set up and upon command of said servers (2A, 2B, 2C), an initial loading of said data sets into said second memory area (81) of a card (6) or a possible subsequent updating thereof, while associating the data with time information concerning the loading or the updating; and
- at least in case the connection between a peripheral terminal (4a...4n) and the desired service provision centre cannot be set up, performing a local service management, by reading the data of interest for that request from said second memory area (81) in the card (6) and utilising the data in local service management means (40, 41, 42) in the peripheral terminal (4a...4n).

11. A method as claimed in claim 10, **characterised in that** in at least some of said peripheral terminals (4b) the local service management is only enabled to deal with service requests which do not require data updating.

12. A method as claimed in claim 10 or 11, **characterised in that** in at least some of said peripheral terminals (4a...4n) the local service management is also enabled to deal with service requests which require data updating, and, in case the connection between a peripheral terminal (4a...4n) and the desired service provision centre (10A, 10B, 10C) cannot be set up, the data are updated directly in said second memory area (81) through local service management means (40, 41, 42) and are associated with time information concerning each updating carried out.

13. A method as claimed in any of claims 10 to 12, **characterised in that**, upon connection with said centre, the data stored in said second memory area (81) are transferred to the concerned server (2A, 2B, 2C), the time information concerning the updating carried out in the card (6) is compared with time information concerning the updating of the same data in the centralised data base (3A, 3B, 3C), and an updating is carried out, under the control of the server (2A, 2B, 2C), either of the second memory area (81) of the card (6), if the data stored therein are older than the data in the centralised data base (3A, 3B, 3C), or of the centralised data base by copying thereinto the data stored in said second memory area (81), if the latter data are more recent than the data stored in the data base.

14. A method as claimed in claim 12 or 13, **characterised in that** a copy of said data sets concerning a plurality of cards (6) are stored also into memory means (41) associated with said local service management means (40, 41, 42) and, whenever data are updated in said second memory area (81), the corresponding data are updated also in said memory means.

15. A method as claimed in claim 14, **characterised in that** local data updating is carried out in said second memory area (81) and in said memory means (41), and said servers (2A, 2B, 2C) are supplied with information concerning the updating carried out.

16. A method as claimed in claim 15, **characterised in that** the data stored in said memory means (41) and locally updated are transferred to said data bases (3A, 3B, 3C), upon command of said servers (2A, 2B, 2C).

17. A method as claimed in any of claims 10 to 16, **characterised in that** said cards are smart cards where said second memory area (81) is divided into a plurality of subareas (81A, 81B, 81C) each univocally associated with one of the services.

18. A method as claimed in any of claims 10 to 17, **characterised in that** write and read passwords, possibly different from each other, are associated with said second memory area (81) or each subarea (81A, 81B, 81C) thereof, said passwords being managed by said servers (2A, 2B, 2C) or said local service management means (40, 41, 42).

19. A method as claimed in any of claims 10 to 18, **characterised in that** data exchange between said cards (6) and said local service management means (40, 41, 42) on the one side, and said servers (2A, 2B, 2C) on the other side takes place in encrypted form.

20. Memory card for use in a system as claimed in any of claims 1 to 9 and in a method as claimed in any of claims 10 to 19, comprising a memory (8) wherein a first memory area (80) stores data required to allow connection with service provision centres (10A, 10B, 10C), **characterised in that** said memory (8) further includes a second memory area (81) that: is intended to store a copy of data sets, which are contained in said data bases (3A, 3B, 3C) and which the owner of the card (6) is authorised to access; is initially written and subsequently updated, if necessary, by the service provision centres (10A, 10B, 10C) during connection with said centres; and is read by local service management means (40, 41, 42) at least in case the connection with a desired centre is impossible.

21. A card as claimed in claim 20, **characterised in that** said second memory area (81) is arranged to be locally updated by local service management means (40, 41, 42).

22. A card as claimed in claim 20 or 21, **characterised in that** it comprises an operating system arranged to manage said second memory area (81) as a plurality of separate memories (81A, 81B, 81C), each univocally associated with a service.
